# EUROPEAN PATENT SPECIFICATION

(11) **EP 2 250 179 B1**
(45) Date of publication and mention of the grant of the patent: **22.01.2020**
(21) Application number: 09705384.7
(22) Date of filing: 29.01.2009
(51) Int. Cl.: C07F 9/10, A23L 33/00, A23L 33/10, C12P 7/64

(54) **LECITHIN BASED COMPOSITION AND ITS USE IN FOOD**
ZUSAMMENSETZUNG AUF LECITHINBASIS UND DEREN VERWENDUNG IN NAHRUNGSMITTELN
COMPOSITION À BASE DE LÉCITHINE ET SON UTILISATION DANS LES ALIMENTS

(30) Priority: 30.01.2008 EP 08101088
(43) Date of publication of application: 17.11.2010
(73) Proprietor: AAK AB (publ), 215 32 Malmö (SE)
(72) Inventor: THIRY, Jean-François, B-6600 Bastogne (BE); DEJARDIN, Philippe, B-4870 Trooz (BE); SCHMITZ, Christian, 6690 Vielsalm (BE); LIGNIAN, Jacques, B-6600 Bastogne (BE); RAMIREZ-HERNAN, Philippe, B-4432 Alleur (BE); DE MEESTER, Fabien, B-6900 Marche-en-Famenne (BE)
(74) Representative: Bergenstråhle Group AB
(86) International application number: PCT/EP2009/050993
(87) International publication number: WO 2009/095435

(56) References cited:
- EP-A- 1 710 296
- WO-A-00/54575
- WO-A-03/105609
- CA-C- 2 201 931
- US-A- 4 670 285
- US-A- 5 709 888
- US-A- 5 869 530
- US-A- 5 965 413

## Description

The present invention relates to an isolated egg yolk lecithin including a total fat content comprising an ω6 long chain polyunsaturated fatty acid (LCPUFA) portion having at least a phospholipidic fraction.

Egg lecithin is a mixing of cholesterol, triglycerides and phospholipids (comprising inter alia phosphatidylcholine, phosphatidylethanolamine and phosphatidylinositol - see for example US 5 869 530).

A triglyceride is a fatty acid ester that is the main component of plant oil and animal fat. When a triglyceride is hydrolyzed (cleaved), fatty acids are released that provide energy for the human body (see for example EP 1 710 296.

A phospholipid is a lipid wherein a fatty acid has been replaced by a phosphate group. Under the enzymatic action of phospholipases, fatty acids contained in the phospholipid are released (see for example WO 03/105609 or US 5 965 413).

The arachidonic acid (ARA) and docosahexaenoic acid (DHA) are both long chain polyunsaturated fatty acids (LCPUFAs). They can therefore been incorporated or in other words, they can constitute a phospholipid or a triglyceride.

Typically, egg lecithin comprises arachidonic acid constituted by a phospholipidic fraction and by a triglyceridic fraction and docosahexaenoic acid constituted by a phospholipidic fraction and by a triglyceridic fraction.

A well known use of egg yolk lecithin product is in infant food, as mentioned in US 4.670.285. US 4.670.285 describes the use of ω6 LCPUFAs at from 5 to 100 mg/100 ml of the infant food formula and of ω3 LCPUFAs at from 0.5 to 60 mg per 100 ml of the formula.

The LCPUFAs are accumulated during pregnancy in the brain of the baby and after the birth, the baby normally receives the needed fatty acids via maternal milk which is rich in ω6 and ω3. in particular in arachidonic and docosahexaenoic acid.

An advantage to using egg yolk lipid as a source of fatty acids is that the C₂₀ and C₂₂. ω6 and ω3 fatty acids are then derived from a natural fat. Moreover, the edible fat product of this invention has beneficial effects on the synthesis of brain tissue, and on the absorption of calcium, and is absorbed in the gut at a high rate. Therefore the fat product is especially suited for incorporation into an infant formula particularly adapted for total nutritional support of the human infant (see for example US 5 869 530).

Today, the FAO/WHO recommendations are to use arachidonic and docosahexaenoic acid as long chain polyunsaturated fatty acids in infant composition at a concentration of respectively 40 and 26.7 mg/100 ml for preterm infant food formula and of respectively 26.7 and 13.3 mg/100 ml for term infant food formula. Recommendation 1% EYPL.

The mother milk contains from 97 to 99 fatty acids in the triglyceride form and from 0.5 to 2 % fatty acids under the phospholipidic form of total lipids and the LCPUFAs are from 90 to 95 % under the triglyceride form and from 5 to 10 % under the phospholipidic form.

CA 2201931 discloses a fat mixture for being used in an infant food formula in which the arachidonic acid present in the fat mixture in the form of phospholipids makes up 0.2 to 3.0 mg/g total fat and the docosahexaenoic acid present in the form of phospholipids makes up 0.1 to 2.0 mg/g total fat, and in which the arachidonic acid and docosahexaenoic acid present in the fat mixture in the form of triglycerides each make up 0.5 to 15 wt% based on the sum of the fatty acids present in the form of triglycerides.

CA 2201931 describes the fact that the LCPUFAs in the form of a mixture of phospholipids and triglycerides can be reduced with respect to the observed values in triglycerides of mother milk, in order to decrease cost.

The plant oils and ruminant milk fats do not contain LCPUFAs under the phospholipidic form and for this reason, when the manufacturer of milk powder for infants intend to approach the natural value of mother milk, he has to use LCPUFAs from animal-derived phospholipids and/or single cell fermentation-derived triglycerides (see for example WO 03/105609 or EP 1 710 296).

With the increasing security of the food chain, fats from animals tend to be safer and eggs gain in confidence to this end, but concentration of LCPUFAs in standard layer eggs is relatively low (±3%).

Nowadays, with the constant increase of the cost of poultry food, extraction of LCPUFAs from common poultry eggs will be shortly not viable from a pure economical point of view.

To solve this problem the invention provides an isolated egg yolk lecithin that does not require to be used at high concentration for reaching the ω6 LCPUFA value recommended and specifically, the arachidonic acid (ARA) value of 2 mg/g total fat, being the standard in the infant food industry, whilst keeping cost low and providing a safe product with respect to quality standard in the food chain.

To this end, the invention provides an isolated egg yolk lecithin as recited in the appended claims.

By the terms "phospholipidic fraction of said ω6 LCPUFA", it is meant ω6-LCPUFA from phospholipids. By the terms "phospholipidic fraction of said ω3 LCPUFA", it is meant ω3 LCPUFA from phospholipids.

Therefore, the isolated egg yolk lecithin according to the invention presents a high content in phospholipids (from 30 to 100 mg/g total fat in ω6 LCPUFA thereby reducing the amount of isolated egg yolk lecithin that is required for the use in an infant food formula and hence reducing the manufacturing costs.

Advantageously, the isolated egg yolk lecithin according to the invention presents an ω6 LCPUFA portion that comprises a phospholipidic fraction ranging from 50 to 100 mg/g total fat content, and preferably from 65 to 100 mg/g total fat content.

In a preferred embodiment, the isolated egg yolk lecithin according to the present invention comprises an ω6 LCPUFA portion which comprises an arachidonic acid portion comprised of a phospholipidic fraction ranging from 24 to 80 mg/g total fat content, and preferably ranging from 40 to 80 mg/g total fat content and preferably from 52 to 80 mg/g total fat content.

In the composition according to the invention, the arachidonic acid is the most important ω6 LCPUFA. Since the most important ω6 LCPUFA in mother milk is also arachidonic acid, the composition according to the invention is particularly useful to this end.

In the isolated egg yolk lecithin according to the invention, the ω6 LCPUFA portion further presents an optional triglyceride fraction ranging from 0 to 2 mg/g total fat content.

By the terms "triglyceride fraction" of an ω6 or ω3 LCPUFA portion, it is respectively meant the ω6 or ω3 LCPUFA from triglycerids.

In a preferred embodiment according to the invention, the ω6 LCPUFA portion presents a triglyceride fraction ranging from 0.01 to 1.7 mg/g total fat content, preferably from 0.01 to 0.5 mg/g total fat content and more preferably from 0.01 to 0.025 mg/g total fat content.

As it can be seen, in the isolated egg yolk lecithin according to the invention, the ratio of triglyceride fraction with respect to the phospholipidic fraction is very small.

In a variant, there is no triglyceride fraction in the isolated lecithin egg yolk .

Advantageously, the total fat content of the isolated egg yolk lecithin further comprises a ω3 LCPUFA portion having a phospholipidic fraction from 4.2 to 17 mg/g total fat, preferably from 7 to 17 mg/g total fat content and more preferably from 9.1 to 17 mg/g total fat.

Particularly, said ω3 LCPUFA portion comprises a docosahexaenoic acid portion having a phospholipidic fraction ranging from 3.4 mg/g to 13.6 mg/g total fat content.

The DHA are also very important LCPUFA that are found in maternal milk and it is very useful that this LCPUFA is present at this amount.

In a preferred embodiment according to the invention, said ω3 LCPUFA portion of the isolated lecithin egg yolk further presents a triglyceride fraction ranging from 0 to 26 mg/l total fat content, aAnd preferably from 0 to 24.8 mg/g total fat.

In a more preferred embodiment, the triglyceride fraction of the ω3 LCPUFA portion of the isolated egg yolk lecithin ranges from 0 to 0.04 mg/g total fat.

In a even more preferred embodiment, the isolated egg yolk lecithin according to the invention does not contain any triglyceride fraction.

As it can be seen, this particular embodiment according to the invention comprises a very high concentration of LCPUFAs in phospholipids with respect to triglycerides, both in the ω6 LCPUFA portion and ω3 LCPUFA portion. Because phospholipids also provide choline to the human body and because they are key cell components for the development of the baby, it is clearly particularly useful to use the lecithin according to the invention in food (either for babies, children, adults or for any animals or even plants requiring phospholipids).

Preferably, the egg yolk lecithin is isolated from a poultry egg such as from a hen, a duck, a quail, an ostrich, a goose, a turkey and the like.

Other embodiments of the isolated egg yolk lecithin according to the invention are mentioned in the annexed claims.

The invention relates also to a fat mixture according to the appended claims.

In a particular embodiment of the invention, the fat mixture comprises a total fat content comprising an ω6 long chain polyunsaturated fatty acid (LCPUFA) portion having at least a phospholipidic fraction and optionally a triglyceride fraction. The fat mixture according to the invention is further characterized in that the phospholipic fraction of the ω6 LCPUFA ranges from 1 mg/g to 100 mg/g total fat content and the triglyceride fraction of the ω6 LCPUFA portion ranges from 0 to 0.5 mg/g total fat.

As it can be seen, the fat mixture according to the invention does preferably not contain triglyceride or just traces, in the ω6 LCPUFA, i.e., does preferably not contain ω6 LCPUFA from triglyceride or just traces.

However, in some cases or applications, triglyceride is needed. In those cases, one or more fat component chosen in the group consisting of plant oil, fish oil, chemical oil and animal fat, single cell oil, aggregated cell oil, fat from animal products such as eggs, milk, flesh, meat, and the like are added in the isolated egg yolk lecithin , to reach the standard of the manufacturer. Plant oil are rich in triglyceride and are very cheap with respect to animal-derived materials, thereby rendering the use appropriate in an economical process for manufacturing a food composition.

Other embodiments of the fat mixture according to the invention are mentioned in the annexed claims.

The invention relates also to its use in the manufacture of an infant food formula comprising from 0.2 to 40 w% of the isolated egg yolk lecithin according to the invention.

The total fat in infant food composition is around 3.8 g/100 ml. By using the lecithin based composition according to the invention being highly concentrated in ω6 LCPUFA, it is possible to manufacture an infant food formula as well as a preterm infant food formula, according to FAO/WHO standards. It has been shown that preterm babies require a higher content in LCPUFA to complete the development of the brain. The very high concentration of ω6 LCPUFAs in the composition according to the invention makes the composition particularly suitable to preterm babies also.

In a preferred embodiment, the infant food formula comprises from 2.3 to 33 w% of the isolated egg yolk lecithin according to the invention.

As it can be seen, for example for term babies, the infant food composition comprising 2.3 % of the isolated egg yolk lecithin according to the invention, for example comprising 88.6 mg phospholipid/g total fat content in the arachidonic acid portion, reaches 2.03 mg/g total fat content in arachidonic acid under the phospholipidic fraction being the standard generally used in infant food formula. Therefore the composition is very economically interesting because the amount to be used is very small.

In a preterm infant food composition, the amount of lecithin according to the invention to be used is around 30 % of the total fat content (25%). Therefore, it is possible to have a very high content of LCPUFAs (FAO/WHO standards) while keeping a possibility for adding other nutriments in the food composition such as milk proteins.

In particular, the infant food formula comprises an ω6 long chain polyunsaturated fatty acid (LCPUFA) portion having at least a phospholipidic fraction and optionally a triglyceride fraction. The infant food formula is characterized in that the phospholipic fraction of the ω6 LCPUFA portion ranges from 1 mg/g to 12 mg/g total fat content and the triglyceride fraction of the ω6 LCPUFA portion ranges from 0 to 0.5 mg/g total fat.

More particularly, the ω6 LCPUFA portion of the infant food formula does not contain any triglyceride fraction or only traces of ω6 LCPUFA from triglyceride.

Advantageously, the ω3 LCPUFA portion of the infant food formula does not contain any triglyceride fraction or only traces of ω3 LCPUFA from triglyceride.

Other embodiments of the infant food composition are mentioned in the annexed claims.

The invention also relates to the use of a composition in the manufacture of an infant food composition. Preferably, from 2.3 to 33 w% of the composition is used.

Other embodiments of the use according to the invention are mentioned in the annexed claims.

Other characteristics and advantages of the invention will appear more clearly in the light of the following description of a particular non-limiting embodiment of the invention, while referring to the examples.

A detailed analysis of the fatty acid pattern has been done.

The results are illustrated in the following Table 1.

**Table 1**

| Fatty acids | g/kg Total fatty acids | g/kg triglycerides | g/kg phospholipids | g/kg free fatty acids |
|---|---|---|---|---|
| C14:0 | 2.18 | 0.13 | 1.86 | 0.18 |
| C16:0 | 203.25 | 4.22 | 180.23 | 18.80 |
| C18:0 | 65.35 | 0.61 | 59.73 | 5.01 |
| C20:0 | 0.20 | 0.00 | 0.00 | 0.20 |
| ∑**(SAFA)** | **270.98** | **4.96** | **241.82** | **24.19** |
| C16:1ω7/9 | 9.52 | 0.84 | 5.32 | 3.36 |
| C18:1ω7/9 | 195.36 | 11.02 | 139.45 | 44.90 |
| C20:1ω9 | 1.63 | 0.04 | 1.06 | 0.53 |
| ∑**(MUFA)** | **206.52** | **11.89** | **145.83** | **48.79** |
| C18:2ω6 | 54.20 | 1.81 | 41.39 | 10.99 |
| C18:3ω3 | 1.36 | 0.13 | 0.62 | 0.61 |
| ∑**(EFA)** | **55.56** | **1.95** | **42.01** | **11.60** |
| C20:4ω6 | 85.75 | 0.11 | 72.34 | 13.30 |
| C22:4ω6 | 3.81 | 0.02 | 3.26 | 0.53 |
| C22:5ω6 | 0.00 | 0.10 | 13.48 | -13.57 |
| ∑**(ω6LCP)** | **89.56** | **0.23** | **89.08** | **0.25** |
| C20:5ω3 | 0.88 | 0.00 | 0.70 | 0.18 |
| C22:5ω3 | 2.52 | 0.02 | 1.67 | 0.83 |
| C22:6ω3 | 13.80 | 0.02 | 9.76 | 4.02 |
| ∑**(ω3LCP)** | **17.20** | **0.04** | **12.13** | **5.03** |
| | **639.81** | **19.07** | **530.87** | **89.87** |

Total fatty acids were analyzed by standard GLC procedure of fatty acid methyl ester (FAME) derivatives, whereas triglyceride and phospholipidic fractions were separated by TLC procedure and submitted to high resolution gas chromatography (HRGC). The results in the table show that C20:4ω6 and C22:5 ω6 are not separated by standard GLC, but well so by HRGC, which explains the result of -13.57 g/kg for C22:5w6 that is obtained by difference between total fatty acids and triglycerides + phospholipids.

### Example 1

The egg yolk lecithin has been extracted according to adaptation of previously described methodologies (WO 87/04711, WO 91/03946, WO 93/25644, WO 01/76715, WO 01/76385, DE 10018213) and the following composition has been obtained (see Table 2).

**Table 2**

| ω6 LCPUFA | | Docosahexaenoic acid | |
|---|---|---|---|
| Phospholipid mg/g total fat | Triglyceride mg/g total fat | Phospholipid mg/g total fat | Triglyceride mg/g total fat |
| 88.4 | 0 | 13.6 | 0 |

The ω6 LCPUFA is comprised of a fraction of arachidonic acid (about 80%) and a fraction of C22:5 ω6, as mentioned in table 1.

### Example 2

2.3 % of the isolated egg yolk lecithin according to the invention obtained in example 1 has been used for manufacturing an infant food composition. The LCPUFA content in the final lecithin is given in Table 3.

**Table 3**

| ω6 LCPUFA | | Docosahexaenoic acid | |
|---|---|---|---|
| Phospholipid mg/g total fat | Triglyceride mg/g total fat | Phospholipid mg/g total fat | Triglyceride mg/g total fat |
| 2.03 | 0 | 0.313 | 0 |

As it can be seen, 2.3 % of the composition according to the invention give a final value that approaches the values for arachidonic acid of 2.0 mg/g total fat (infant food standard).

### Example 3

Several amounts of isolated egg yolk lecithin according to the invention obtained from example 1 have been used in an infant food composition. The LCPUFA content in the final food product is illustrated in Table 4.

**Table 4**

| Infant food formula n° | % | ω6 LCPUFA | | Docosahexaenoic acid | |
|---|---|---|---|---|---|
| | | Phospholipid mg/g total fat | Triglyceride mg/g total fat | Phospholipid mg/g total fat | Triglyceride mg/g total fat |
| 1 | 3.5 | 3.1 | 0 | 0.476 | 0 |
| 2 | 12 | 10.6 | 0 | 1.63 | 0 |
| 3 | 8 | 7.07 | 0 | 1.088 | 0 |

As it can be seen, the infant food formula 2 can be appropriate for a use as preterm infant food by requiring only 12 % of the composition in total fat. The use is therefore quite non expensive while keeping 88 % free for adding other nutriments. The FAO/WHO recommends to use 10 mg/g total fat for a preterm infant food composition in arachidonic acid. Therefore, the composition is particularly suitable.

Infant food formula 3 follows the FAO/WHO recommendation for term infant food composition requiring 7 mg/g arachidonic acid.

### Example 4

Fish oil has been added to the composition according to the invention for obtaining the following composition (see Table 5).

**Table 5**

| ω6 LCPUFA | | Docosahexaenoic acid | |
|---|---|---|---|
| Phospholipid mg/g total fat | Triglyceride mg/g total fat | Phospholipid mg/g total fat | Triglyceride mg/g total fat |
| 31.0 | 1.7 | 7.9 | 24.8 |

### Example 5

6.15 % of the isolated egg yolk lecithin according to the invention obtained in example 4 have been added to an infant food composition. The LCPUFA content in the final product is given in Table 6.

**Table 6**

| ω6 LCPUFA | | Docosahexaenoic acid | |
|---|---|---|---|
| Phospholipid mg/g total fat | Triglyceride mg/g total fat | Phospholipid mg/g total fat | Triglyceride mg/g total fat |
| 1.905 | 0.105 | 0.486 | 1.525 |

As it can be seen, the 3.5 % of the composition according to the invention give a final value that approaches the values for arachidonic acid in the maternal milk while providing triglyceride as it can be desirable in some cases.

### Example 6

Several amounts of isolated egg yolk lecithin according to the invention obtained from example 4 have been used in an infant food composition. The LCPUFA content in the final food product is illustrated in Table 7.

**Table 7**

| Infant food formula n° | % | ω6 LCPUFA | | Docosahexaenoic acid | |
|---|---|---|---|---|---|
| | | Phospholipid mg/g total fat | Triglyceride mg/g total fat | Phospholipid mg/g total fat | Triglyceride mg/g total fat |
| 4 | 10 | 3.1 | 0.17 | 0.79 | 2.48 |
| 5 | 33 | 10.23 | 0.561 | 2.61 | 8.18 |
| 6 | 22 | 6.82 | 0.374 | 1.74 | 5.46 |

As it can be seen, the infant food formula 5 can be appropriate for a use as preterm infant food by requiring only 33 % of the composition in total fat. The use is therefore quite non-expensive while keeping 67 % free for adding other fats. The FAO/WHO recommend to use 10 mg/g total fat for a preterm infant food composition in arachidonic acid. Therefore, the composition is particularly suitable.

Infant food formula 6 follows the FAO/WHO recommendation for term infant food composition requiring 7 mg/g arachidonic acid.

Although the preferred embodiments of the invention have been disclosed for illustrative purpose, those skilled in the art will appreciate that various modifications, additions, or substitutions are possible, without departing from the scope of the invention as disclosed in the accompanying claims.

## Claims

1. Isolated egg yolk lecithin product comprising a total fat content comprising an ω6 long chain polyunsaturated fatty acid (LCPUFA) portion having at least a phospholipidic fraction, **characterized in that** the phospholipidic fraction of said ω6 LCPUFA ranges from 30 mg/g to 100 mg/g total fat content; and a ω3 LCPUFA portion comprises a docosahexaenoic acid portion having a phospholipidic fraction ranging from 3.4 mg/g to 13.6 mg/g total fat content.

2. Isolated egg yolk lecithin product according to claim 1, wherein said ω6 LCPUFA portion comprises a phospholipidic fraction ranging from 50 to 100 mg/g total fat content, and preferably from 65 to 100 mg/g total fat content.

3. Isolated egg yolk lecithin product according to claim 1, wherein said ω6 LCPUFA portion comprises an arachidonic acid portion comprised of a phospholipidic fraction ranging from 24 to 80 mg/g total fat content.

4. Isolated isolated egg yolk lecithin product according to claim 3, wherein said arachidonic acid portion comprises a phospholipidic fraction ranging from 40 to 80 mg/g total fat content and preferably from 52 to 80 mg/g total fat content.

5. Isolated egg yolk lecithin product according to anyone of the precedent claims, wherein the ω6 LCPUFA portion further presents a triglyceride fraction ranging from 0 to 2 mg/g total fat content

6. Isolated egg yolk lecithin product according to claim 5, wherein the triglyceride fraction of said ω6 LCPUFA portion ranges from 0.01 to 1.7 mg/g total fat content and preferably from 0.01 to 0.5 mg/g total fat content and more preferably from 0.01 to 0.025 mg/g total fat content.

7. Isolated egg yolk lecithin product according to anyone of the precedent claims, comprising a ω3 LCPUFA portion having a phospholipidic fraction from 4.2 to 17 mg/g total fat.

8. Isolated egg yolk lecithin product according to claim 7, wherein said phospholipidic fraction of said ω3 LCPUFA portion ranges from 7 to 17 mg/g total fat content and preferably from 9.1 to 17 mg/g total fat.

9. Isolated egg yolk lecithin product according to anyone of the claims 7 to 8, wherein said ω3 LCPUFA portion further presents a triglyceride fraction ranging from 0 to 26 mg/l total fat content, and preferably from 0 to 24.8 mg/g total fat.

10. Isolated egg lecithin based composition according to anyone of the precedent claims 7 to 8, wherein said triglyceride fraction of the ω3 LCPUFA portion ranges from 0 to 0.04 mg/g total fat.

11. Isolated egg yolk lecithin product according to anyone of the claims 1 to 4 or 7 to 8 without any triglyceride fraction

12. Use of the isolated egg yolk lecithin product according to anyone of the precedent claims in the manufacture of a fat mixture.

13. Use according to claim 12, the fat mixture comprising one or more fat component chosen in the group consisting of plant oil, fish oil, chemical oil and animal fat, single cell oil, aggregated cell oil, fat from animal products such as eggs, milk, flesh, meat, and the like.

14. Use of the isolated egg yolk lecithin according to anyone of the claims 1 to 11, in the manufacture of an infant food composition.

15. Use according to claim 14, wherein from 2.3 to 33 % w/w of the composition is used.

## Patentansprüche

1. Isoliertes Eidotter-Lecithin, umfassend einen Gesamtfettgehalt, der einen Teil aus einer langkettigen mehrfach ungesättigten Fettsäure (LCPUFA) vom Typ ω6 mit zumindest einem Phospholipid-Anteil umfasst, **dadurch gekennzeichnet, dass** der Phospholipid-Anteil die ω6-LCPUFA in einem Bereich von 30 mg/g bis 100 mg/g Gesamtfettgehalt liegt; und einen ω3-LCPUFA-Teil der einen Docosahexaensäure-Teil mit einem Phospholipid-Anteil in einem Bereich von 3,4 mg/g bis 13,6 mg/g Gesamtfettgehalt umfasst.

2. Isoliertes Eidotter-Lecithin nach Anspruch 1, wobei der ω6-LCPUFA-Teil einen Phospholipid-Anteil in einem Bereich von 50 bis 100 mg/g Gesamtfettgehalt und vorzugsweise von 65 bis 100 mg/g Gesamtfettgehalt umfasst.

3. Isoliertes Eidotter-Lecithin nach Anspruch 1, wobei der ω6-LCPUFA-Teil einen Arachidonsäure-Teil umfasst, der aus einem Phospholipid-Anteil in einem Bereich von 24 bis 80 mg/g Gesamtfettgehalt besteht.

4. Isoliertes Eidotter-Lecithin nach Anspruch 3, wobei der Arachidonsäure-Teil einen Phospholipid-Anteil in einem Bereich von 40 bis 80 mg/g Gesamtfettgehalt und vorzugsweise von 52 bis 80 mg/g Gesamtfettgehalt umfasst.

5. Isoliertes Eidotter-Lecithin nach einem der vorstehenden Ansprüche, wobei der ω6-LCPUFA-Teil weiter einen Triglycerid-Anteil in einem Bereich von 0 bis 2 mg/g Gesamtfettgehalt aufweist.

6. Isoliertes Eidotter-Lecithin nach Anspruch 5, wobei der Triglycerid-Anteil des ω6-LCPUFA-Teils in einem Bereich von 0,01 bis 1,7 mg/g Gesamtfettgehalt und vorzugsweise von 0,01 bis 0,5 mg/g Gesamtfettgehalt und bevorzugter von 0,01 bis 0,025 mg/g Gesamtfettgehalt liegt.

7. Isoliertes Eidotter-Lecithin nach einem der vorstehenden Ansprüche, umfassend einen ω3-LCPUFA-Teil mit einem Phospholipid-Anteil von 4,2 bis 17 mg/g Gesamtfett.

8. Isoliertes Eidotter-Lecithin nach Anspruch 7, wobei der Phospholipid-Anteil des ω3-LCPUFA-Teils in einem Bereich von 7 bis 17 mg/g Gesamtfettgehalt und vorzugsweise von 9,1 bis 17 mg/g Gesamtfett liegt.

9. Isoliertes Eidotter-Lecithin nach einem der Ansprüche 7 bis 8, wobei der ω3-LCPUFA-Teil weiter einen Triglycerid-Anteil in einem Bereich von 0 bis 26 mg/g Gesamtfettgehalt und vorzugsweise von 0 bis 24,8 mg/g Gesamtfett aufweist.

10. Isoliertes Eidotter-Lecithin nach einem der vorstehenden Ansprüche 7 bis 8, wobei der Triglycerid-Anteil es ω3-LCPUFA-Teils in einem Bereich von 0 bis 0,04 mg/g Gesamtfett liegt.

11. Isoliertes Eidotter-Lecithin nach einem der Ansprüche 1 bis 4 oder 7 bis 8, ohne jeglichen Triglycerid-Anteil.

12. Verwendung des isolierten Eidotter-Lecithins nach einem der vorstehenden Ansprüche bei der Herstellung eines Fettgemischs.

13. Verwendung nach Anspruch 12, wobei das Fettgemisch weiter eine oder mehrere Fettkomponenten umfasst, die ausgewählt sind aus der Gruppe bestehend aus Pflanzenöl, Fischöl, chemischem Öl und tierischem Fett, Einzelleröl, Öl aus aggregierten Zellen, Fett aus Tierprodukten wie Eiern, Milch, Haut, Fleisch und dergleichen.

14. Verwendung des isolierten Eidotter-Lecithins nach einem der Ansprüche 1 bis 11 bei der Herstellung einer Nahrungsmittelzusammensetzung für Säuglinge.

15. Verwendung nach Anspruch 14, wobei 2,3 bis 33 % w/w des isolierten Eidotter-Lecithins verwendet werden.

## Revendications

1. Lécithine de jaune d'œuf isolée comprenant une teneur totale en matières grasses comprenant une partie d'acides gras polyinsaturés à chaîne longue ω6 (LCPUFA) ayant au moins une fraction phospholipidique, **caractérisée en ce que** la fraction phospholipidique desdits LCPUFA ω6 va de 30 mg/g à 100 mg/g de teneur totale en matières grasses ; et une partie de LCPUFA ω3 comprend une partie d'acide docosahexanoïque ayant une fraction phospholipidique allant de 3,4 mg/g à 13,6 mg/g de teneur totale en matières grasses.

2. Lécithine de jaune d'œuf isolée selon la revendication 1, dans laquelle ladite partie de LCPUFA ω6 comprend une fraction phospholipidique allant de 50 à 100 mg/g de teneur totale en matières grasses, et de préférence de 65 à 100 mg/g de teneur totale en matières grasses.

3. Lécithine de jaune d'œuf isolée selon la revendication 1, dans laquelle ladite partie de LCPUFA ω6 comprend une partie d'acide arachidonique comprenant une fraction phospholipidique allant de 24 à 80 mg/g de teneur totale en matières grasses.

4. Lécithine de jaune d'œuf isolée selon la revendication 3, dans laquelle ladite partie d'acide arachidonique comprend une fraction phospholipidique allant de 40 à 80 mg/g de teneur totale en matières grasses et de préférence de 52 à 80 mg/g de teneur totale en matières grasses.

5. Lécithine de jaune d'œuf isolée selon l'une quelconque des revendications précédentes, dans laquelle la partie de LCPUFA ω6 présente en outre une fraction de triglycérides allant de 0 à 2 mg/g de teneur totale en matières grasses.

6. Lécithine de jaune d'œuf isolée selon la revendication 5, dans laquelle la fraction de triglycérides de ladite partie de LCPUFA ω6 va de 0,01 à 1,7 mg/g de teneur totale en matières grasses et de préférence de 0,01 à 0,5 mg/g de teneur totale en matières grasses et de préférence encore de 0,01 à 0,025 mg/g de teneur totale en matières grasses.

7. Lécithine de jaune d'œuf isolée selon l'une quelconque des revendications précédentes, comprenant une partie de LCPUFA ω3 ayant une fraction phospholipidique de 4,2 à 17 mg/g de matières grasses totales.

8. Lécithine de jaune d'œuf isolée selon la revendication 7, dans laquelle ladite fraction phospholipidique de ladite partie de LCPUFA ω3 va de 7 à 17 mg/g de teneur totale en matières grasses et de préférence de 9,1 à 17 mg/g de matières grasses totales.

9. Lécithine de jaune d'œuf isolée selon l'une quelconque des revendications 7 à 8, dans laquelle ladite partie de LCPUFA ω3 présente en outre une fraction de triglycérides allant de 0 à 26 mg/g de teneur totale en matières grasses, et de préférence de 0 à 24,8 mg/g de matières grasses totales.

10. Lécithine de jaune d'œuf isolée selon l'une quelconque des revendications 7 et 8 précédentes, dans laquelle ladite fraction de triglycérides de la partie de LCPUFA ω3 va de 0 à 0,04 mg/g de matières grasses totales.

11. Lécithine de jaune d'œuf isolée selon l'une quelconque des revendications 1 à 4 ou 7 à 8, sans aucune fraction de triglycérides.

12. Utilisation de la lécithine de jaune d'œuf isolée selon l'une quelconque des revendications précédentes dans la fabrication d'un mélange gras.

13. Utilisation selon la revendication 12, le mélange gras comprenant en outre un ou plusieurs composants gras choisis dans le groupe constitué d'une huile végétale, d'une huile de poisson, d'une huile chimique et d'une graisse animale, d'une huile unicellulaire, d'une huile à cellules agrégées, d'une graisse issue de produits d'origine animale tels que les œufs, le lait, la chair, la viande et similaires.

14. Utilisation de la lécithine de jaune d'œuf isolée selon l'une quelconque des revendications 1 à 11, dans la fabrication d'une composition d'aliment pour nourrissons.

15. Utilisation selon la revendication 14, dans laquelle on utilise de 2,3 à 33 % en poids de la lécithine de jaune d'œuf isolé.
